# FASCICULE DE BREVET EUROPEEN

(11) **EP 1 424 658 B1**
(45) Date de publication et mention de la délivrance du brevet: **08.03.2006**
(21) Numéro de dépôt: 03024617.7
(22) Date de dépôt: 25.10.2003
(51) Int. Cl.: G07C 9/00

(54) **Procédé d'introduction d'un code de sécurité à l'aide d'un écran tactile pour l'accès à une fonction, à un appareil ou à un lieu déterminé, et dispositif pour sa misa en oeuvre**
Sicherheitskode-Eingabeverfahren mit einem berührungsempfindlichen Bildschirm für den Zugriff auf eine Funktion, ein Gerät oder einen vorbestimmten Ort, und zugehörige Vorrichtung
Security code input method using a touch screen for accessing a function, an apparatus or a specific area, and device therefor

(30) Priorité: 26.11.2002 EP 02079952
(43) Date de publication de la demande: 02.06.2004
(73) Titulaire: ASULAB S.A., 2074 Marin (CH)
(72) Inventeur: Gauthey, Darryl, 1400 Yverdon (CH); Farine, Pierre-André, 2000 Neuchâtel (CH)
(74) Mandataire: Ravenel, Thierry Gérard Louis

(56) Documents cités:
- EP-A- 0 910 050
- EP-A- 1 065 791
- EP-A- 1 079 325
- EP-A- 1 207 439
- WO-A-01/91061
- FR-A- 2 798 208
- US-B1- 6 193 152
- US-B1- 6 359 838

## Description

L'invention concerne un procédé d'introduction d'un code de sécurité à l'aide d'un écran tactile d'un dispositif électronique pour l'accès à une fonction, à un appareil ou à un lieu déterminé. L'écran tactile du dispositif comprend des touches de commande qui peuvent être activées par une action manuelle d'un utilisateur au moyen d'un doigt ou d'un stylet. Chaque touche est constituée par au moins une plage sensible reliée à une unité à microprocesseur du dispositif électronique. Le procédé d'introduction du code de sécurité peut être mis en oeuvre par exemple à l'aide d'un objet portable, tel qu'une montre-bracelet.

L'invention concerne également un dispositif électronique pour la mise en oeuvre du procédé.

Dans certaines applications, il est nécessaire de composer un code de sécurité pour donner accès à la personne autorisée à un appareil, tel qu'une station d'ordinateur personnelle, ou à un lieu protégé, tel qu'une chambre forte ou un local spécifique d'un bâtiment ou sa propre maison. Pour ce faire, il a déjà été proposé dans le document GB 2 129176 de munir un utilisateur d'une montre-bracelet dans laquelle un code de sécurité a été mémorisé dans une mémoire non volatile. Le fond du boîtier de la montre comprend des contacts électriques pour venir en contact avec le poignet d'un utilisateur. La montre comprend encore des moyens de transmission du code de sécurité. Quand un doigt du porteur de la montre personnelle vient contacter une surface conductrice d'un récepteur d'un lieu à accéder, le code de sécurité est transmis automatiquement de manière numérique par voie résistive. Les signaux du code de sécurité sont donc transmis à travers la main du porteur de la montre depuis une unité de traitement de la montre au récepteur. Ce code de sécurité est donc dépendant des paramètres corporels du porteur de la montre ce qui peut permettre d'identifier la personne autorisée à pénétrer dans le lieu protégé.

Un inconvénient d'un tel procédé d'accès est que la transmission de ce code de sécurité est dépendante également de la valeur du condensateur défini entre le poignet de l'utilisateur de la montre et la masse. De ce fait, le type de chaussures que porte l'utilisateur de la montre peut avoir une influence considérable sur la reconnaissance du code de sécurité transmis au récepteur du lieu à accéder.

Pour l'introduction du code de sécurité d'autres solutions sont envisageables. Dans des dispositifs plus compliqués, un contrôle de la reconnaissance de la parole, d'une empreinte digitale ou de la structure interne de l'oeil peut être réalisé pour fournir un code de sécurité pour l'accès à un appareil ou à un lieu déterminé.

De manière plus simple, le code de sécurité peut être composé sur une montre et transmis notamment par des moyens de transmission de signaux radiofréquences, optiques ou acoustiques. Ce code de sécurité peut être introduit par différents boutons ou touches de la montre. Selon la présente invention, le code de sécurité est introduit par exemple par un utilisateur au moyen d'un doigt ou d'un stylet sur un écran tactile d'un dispositif électronique.

Le document US 6,193,152 décrit un dispositif permettant l'introduction d'un code de sécurité (PIN ou signature) à l'aide d'un écran tactile pour l'accès à une fonction (paiement, contrôle d'accès). L'écran tactile comprend des plages sensibles permettant de positionner le doigt ou le stylet sur l'écran. Le code de sécurité (PIN) est authentifié après que l'utilisateur a composé le code sur les touches affichées sur l'écran tactile.

Dans le domaine de la reconnaissance de caractères, il est connu d'utiliser un écran tactile muni de plusieurs plages sensibles au toucher. On peut citer à ce titre le document US 4,139,837, qui décrit une montre-bracelet disposant d'un tel écran tactile. Dans ce document, les plages sensibles de l'écran tactile sont reliées à un circuit logique et à une unité de traitement de manière à reconnaître des caractères, tels que des chiffres ou des opérateurs de calcul, tracés par le doigt d'un utilisateur. L'unité de traitement reconnaît le chiffre ou l'opérateur tracé par le doigt de l'utilisateur en tenant compte de la plage sensible de départ, de la plage sensible d'arrivée du doigt et des plages sensibles touchées lors du déplacement du doigt. Ainsi, à l'aide de cet écran tactile, il est possible de réaliser une reconnaissance d'un caractère par le déplacement du doigt sur les plages sensibles du verre. Cette montre peut être utilisée par exemple comme une calculatrice. Cependant, rien n'est prévu dans cette montre pour composer un code de sécurité permettant d'accéder à une fonction particulière de la montre, à un appareil ou à un lieu distants du porteur de la montre.

L'invention a donc pour objet un procédé d'introduction d'un code de sécurité à l'aide d'un écran tactile d'un dispositif électronique pour l'accès à une fonction, à un appareil ou à un lieu qui pallie les inconvénients de l'état de l'art et qui permette de rapidement et facilement composer ledit code de sécurité.

A cet effet, l'objet de l'invention concerne un procédé d'introduction d'un code de sécurité qui comprend les caractéristiques mentionnées dans la revendication 1.

Un avantage du procédé d'introduction du code de sécurité selon l'invention est qu'il est facile et rapide à l'aide d'un doigt ou d'un stylet, d'introduire un tel code sur un écran tactile d'un dispositif électronique sans nécessiter l'emploi d'un clavier à boutons-poussoirs. Ce dispositif électronique peut faire partie d'un appareil ou d'un objet portable, ou être disposé à l'entrée d'un lieu déterminé.

Une montre-bracelet peut avantageusement être utilisée pour la mise en oeuvre du procédé d'introduction du code de sécurité, car elle constitue un objet portable que beaucoup de personnes portent quotidiennement notamment pour l'indication de l'heure et de la date. Des touches de commande pour la composition ducode de sécurité sont définies à l'aide de plages sensibles disposées sur une face intérieure ou extérieure du verre de montre. En disposant un nombre déterminé de plages sensibles en périphérie du verre, il peut être facile à un doigt d'un utilisateur de composer le code de sécurité. Le nombre de touches ou plages sensibles en périphérie du verre peut être par exemple égal à 6 tout en étant suffisamment espacées les unes des autres.

A l'aide du bord supérieur de la lunette du boîtier ou de la partie de la carrure entourant le verre de montre, le doigt peut facilement passer d'une touche de la première référence à la touche de la deuxième référence du code à composer. Suivant que le doigt est déplacé dans le sens horaire ou anti-horaire de la première référence à la deuxième référence, deux codes de sécurité peuvent être composés et reconnus par l'unité à microprocesseur. Toutefois, l'unité à microprocesseur pourrait être en mesure de prendre en compte les multiples déplacements du doigt sur diverses plages sensibles du verre de montre entre la touche de la première référence et la touche de la seconde référence du code. De ce fait, plusieurs codes de sécurité peuvent être composés avec uniquement deux références, qui sont par exemple des chiffres, pour autant que l'utilisateur se rappelle de la manière de déplacer le doigt sur le verre.

Si plus de deux références doivent être composées pour le code de sécurité, il peut être programmé que le doigt suive le bord supérieur de la lunette entre chaque référence dans un sens anti-horaire ou dans un sens horaire. Ce bord de la lunette est de préférence circulaire, mais peut aussi être de forme rectangulaire ou autre. Ainsi, la composition du code de sécurité sur le verre de montre peut être apparenté à la composition d'un code de sécurité d'une serrure à roulette d'un coffre-fort. Lors du déplacement du doigt ou du stylet sur l'écran tactile entre la première référence et la dernière référence du code, l'unité à microprocesseur peut détecter un changement de trajectoire de déplacement du doigt ou du stylet sur l'écran à l'endroit de la touche de chaque référence à introduire. Il peut être également prévu que l'unité à microprocesseur détecte une période de temps déterminée de maintien du doigt ou du stylet sur la touche de la référence à introduire

Selon une forme particulière de réalisation d'un objet portable, tel qu'une montre-bracelet ou un téléphone portable pour la mise en oeuvre du procédé selon l'invention, l'écran tactile peut comprendre des touches de commande réparties sous forme matricielle. Chaque touche de commande est définie par une ou plusieurs plages sensibles selon une configuration établie par l'unité à microprocesseur. Le nombre de plages sensibles dans cette configuration peut être supérieur à 25.

A cet effet, l'objet de l'invention concerne également un dispositif électronique pour la mise en oeuvre du procédé, qui comprend les caractéristiques mentionnées dans la revendication 15.

Les buts, avantages et caractéristiques du procédé d'introduction du code de sécurité à l'aide d'un écran tactile d'un dispositif électronique apparaîtront mieux dans la description suivante en regard des dessins sur lesquels :
La figure 1a représente les différentes étapes d'introduction du code de sécurité du procédé selon l'invention à l'aide d'un écran tactile d'un dispositif électronique, tel qu'une montre-bracelet selon une première forme d'exécution,
la figure 1b représente de manière plus schématique les différentes étapes d'introduction du code de sécurité du procédé selon l'invention de la figure 1a,
la figure 2 représente une coupe partielle selon A-A de la montre-bracelet de la figure 1a,
la figure 3 représente schématiquement différents blocs électroniques de la montre-bracelet de la figure 1a pour la mise en oeuvre du procédé d'introduction du code de sécurité selon l'invention,
la figure 4a représente une station d'ordinateur et une montre-bracelet de la figure 1a pour la mise en oeuvre du procédé d'introduction du code de sécurité selon l'invention, et
la figure 4b représente un lieu protégé fermé par une porte et une seconde forme d'exécution d'une montre-bracelet pour la mise en oeuvre du procédé d'introduction du code de sécurité selon l'invention pour l'accès au lieu.

Dans la description suivante, tous les composants électroniques servant à la mise en oeuvre du procédé d'introduction du code de sécurité, qui sont bien connus d'un homme du métier dans ce domaine technique, ne seront pas expliqués en détail. Le code de sécurité, selon le procédé de l'invention, est composé à l'aide de touches de commande d'un écran tactile d'un dispositif électronique par un doigt d'un utilisateur. Ce code est généralement défini par au moins une première référence d'une plage sensible d'une touche activée de l'écran, une seconde référence de la même touche ou d'une autre touche activée, et le trajet emprunté par le doigt sur l'écran tactile de la première référence à la seconde référence. Le trajet détecté du doigt sur l'écran peut être fait par un contrôle de la ou des plages activées de la première référence à la seconde référence.

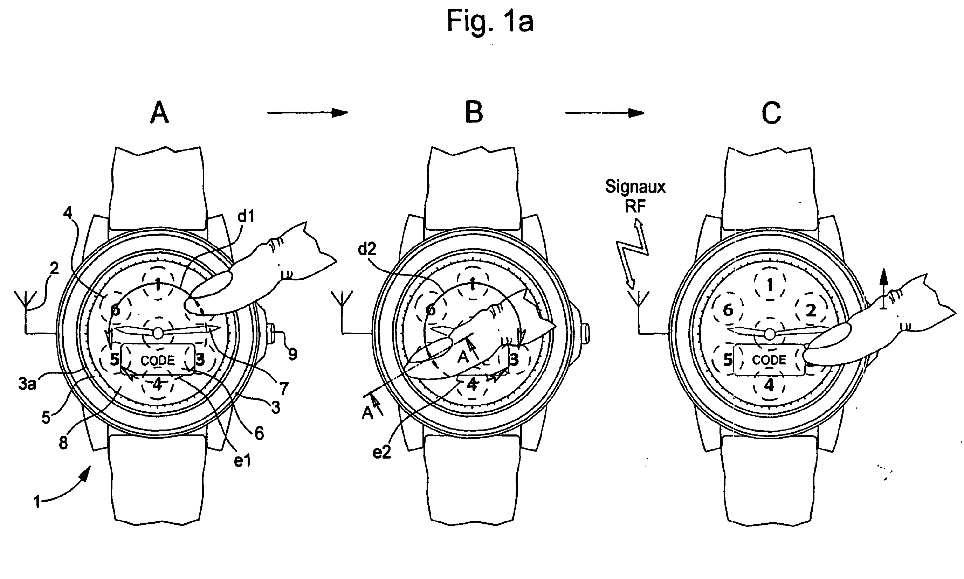

Pour la mise en oeuvre du procédé d'introduction du code de sécurité en référence à la figure 1a, le dispositif électronique est de préférence une montre-bracelet selon une première forme d'exécution. La montre-bracelet 1 est du type analogique avec un cadran 8, des aiguilles 7 d'indication de l'heure, un mouvement horloger disposé sous le cadran 8 dans un boîtier 3 fermé par un verre 5, un affichage à cristaux liquides 6 pour afficher des données ou des opérations à effectuer, des touches de commande 4 sur la face intérieure du verre et un bouton de commande 9 sur le boîtier. Le verre 5 est maintenu par une lunette 3a ou par la partie supérieure de la carrure du boîtier 3. Une pile ou un accumulateur, non représenté, dans le boîtier 3 permet de fournir l'alimentation électrique aux composants électroniques de la montre. Les touches de commande 4 sont de préférence des capteurs de type capacitif qui peuvent être activés chacun par un doigt d'un utilisateur ou un stylet, non représenté, posé dans une zone déterminée du capteur à activer. Au moins une plage sensible, de préférence-transparente, constitue chaque capteur ou touche de commande.

Il est bien clair qu'une montre à affichage de l'heure de façon numérique disposant par exemple de boutons de commande sur le boîtier pour l'activation de diverses fonctions de la montre peut aussi être envisagée. De même, au moins une couronne peut être prévue notamment pour le réglage de l'heure et de la date.

Le verre 5 portant les touches 4 ou plages sensibles au toucher sur sa face intérieure, constitue l'écran tactile du dispositif électronique, qui est dans ce cas une montre-bracelet. Dans cette forme d'exécution de la figure 1a, le verre de montre comprend 6 touches ou plages sensibles 4 suffisamment espacées, qui sont disposées en périphérie du verre. Une touche ou plage sensible peut être placée au centre du verre pour la sélection de différents menus de fonctions de la montre. Dans le menu d'introduction du code de sécurité, chaque touche représente un chiffre ou un nombre du code à composer. Pour faciliter l'introduction du code, des repères, désignant des chiffres ou nombres, peuvent être placés sous le verre pour indiquer la position des touches ou plages sensibles transparentes.

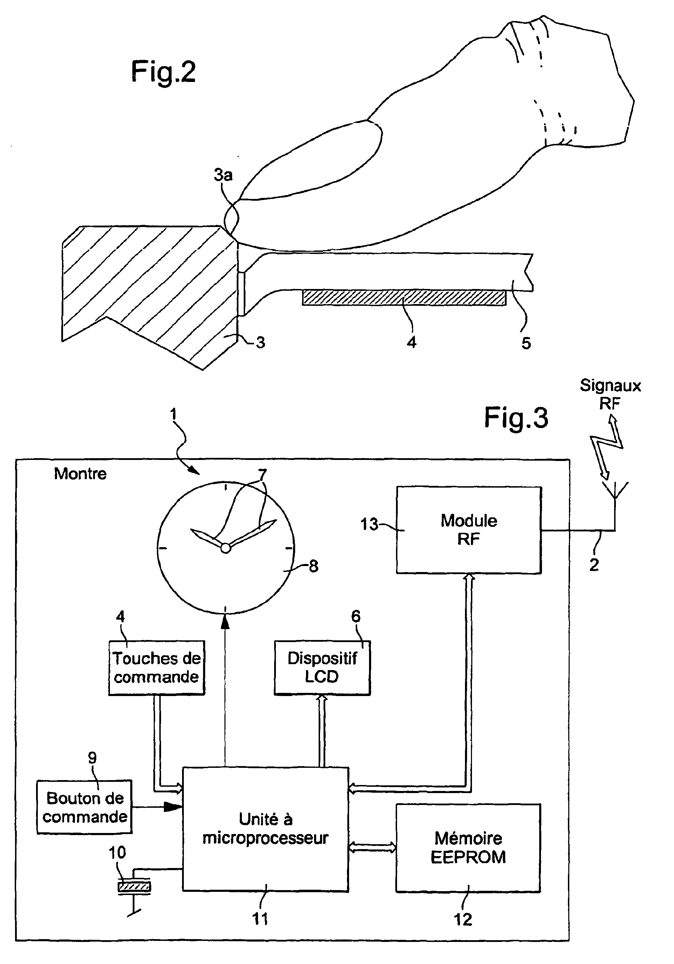

Comme montré à la figure 2, la partie supérieure de la lunette 3a du boîtier 3 de la montre comprend un bord, qui peut être chanfreiné. Le doigt peut prendre appui sur ce bord de la lunette lors de ses déplacements sur les touches de la périphérie du verre pour composer le code de sécurité. La face extérieure du verre est donc de préférence située en dessous du bord supérieur de la lunette 3a pour faciliter le guidage du doigt sur le verre.

Pour la mise en oeuvre du procédé selon l'invention, la montre-bracelet 1 comprend différents composants électroniques représentés schématiquement à la figure 3. La montre 1 comprend notamment une unité à microprocesseur 11 programmée pour l'exécution de certaines fonctions personnalisées, par exemple pour une fonction agenda ou pour une fonction de composition du code de sécurité. Cette unité à microprocesseur 11 comportent également certains modules en relation avec la base de temps pour la commande de l'affichage de l'heure par les aiguilles 7 sur le cadran 8 de montre. Un étage oscillateur relié à un résonateur à quartz 10 est disposé dans l'unité à microprocesseur 11 pour cadencer différentes opérations de la montre. La fréquence d'oscillation peut être de l'ordre de 32'768 Hz.

Le microprocesseur de l'unité 11 peut être par exemple le microprocesseur PUNCH à 8-bit fabriqué par la société EM Microelectronic-Marin SA en Suisse.

Une fois que le bouton de commande 9 est pressé par exemple, les touches de commandes 4 de l'écran tactile peuvent être activées pour fournir des signaux à l'unité à microprocesseur 11. Dans un mode de composition du code de sécurité, ces signaux provenant des touches 4 sont relatifs aux chiffres ou aux nombres du code à composer et au trajet emprunté par le doigt sur le verre pour la composition du code. L'unité à microprocesseur reliée aux plages sensibles permet de traduire les actions du doigt sur le verre de montre pour la composition du code de sécurité. Dans un autre mode sélectionné, les touches 4 peuvent également servir à la sélection de différents menus par exemple d'une fonction agenda. Dans cette fonction agenda, il peut être édité des données à mémoriser dans la mémoire non volatile EEPROM 12. Les données consultées ou éditées peuvent apparaître sur au moins un affichage à cristaux liquides 6.

L'unité à microprocesseur 11 peut être connectée à un module RF 13 et une antenne 2 de moyens d'émission et/ou de réception de signaux radiofréquences pour la transmission du code de sécurité à un appareil, tel qu'une station d'ordinateur ou à un portique. Des signaux radiofréquences relatifs à une demande du code de sécurité peuvent également être reçus par les moyens d'émission et/ou de réception. Dans ce cas, les touches de commande du verre de montre peuvent être mises en fonction dès la réception des signaux de demande du code. Ces moyens d'émission et/ou de réception ne seront pas expliqués en détail car il font partie des connaissances générales d'un homme du métier dans ce domaine technique.

Pour des détails techniques complémentaires sur l'agencement des plages sensibles et les composants électroniques de la montre, le lecteur peut se référer au document EP 0 838 737 du même Demandeur et aux points 2 et 5 de la publication du 30 septembre 1999 lors du 64° congrès de la Société Suisse de Chronométrie et intitulée "Montre altimètre-boussole présentant un nouveau concept d'utilisation" d'Asulab S.A. qui sont cités en référence.

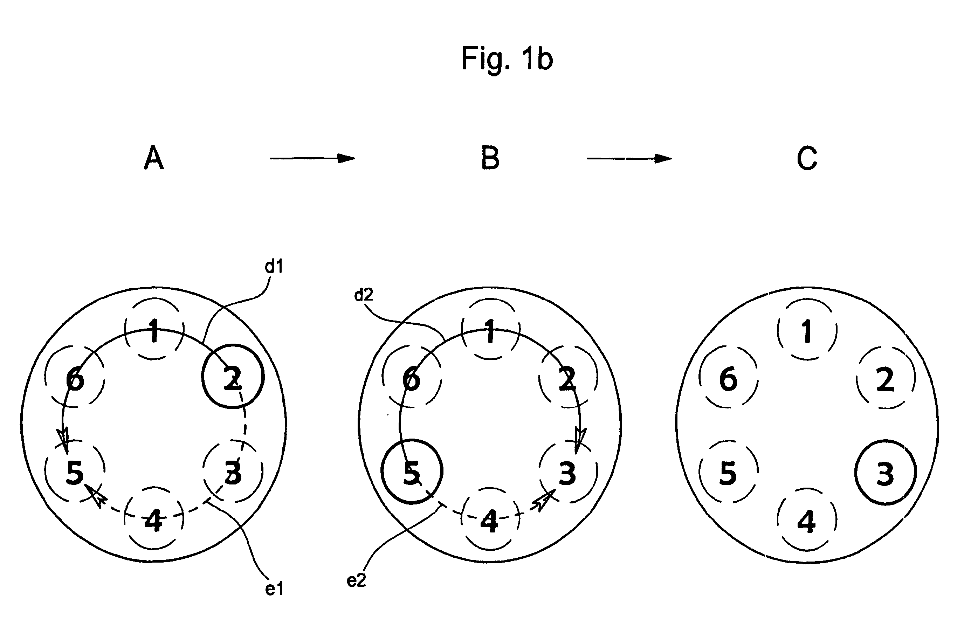

Dans les figures 1a et 1b, le code de sécurité est composé de trois chiffres, par exemple le 2, le 5 et le 3. Il est bien clair qu'il peut être prévu de définir le code uniquement avec deux chiffres ou plus de trois chiffres. Ceci dépend de la programmation préalable effectuée par l'utilisateur notamment dans l'unité à microprocesseur et mémorisée dans la mémoire non volatile.

Comme montré sur le plan A de la figure 1a, le doigt doit être tout d'abord posé sur la touche ou la plage sensible d'une première référence du code de sécurité à composer, par exemple le chiffre 2. L'unité à microprocesseur peut reconnaître directement la première référence du code à composer dès que le doigt est placé sur la touche ou la plage sensible de la première référence. Cependant, il peut également être prévu que le doigt soit maintenu pendant une période de temps déterminée sur la touche de cette première référence pour confirmer l'introduction de cette première référence dans le code à composer. La période de temps déterminée pour la reconnaissance de la référence à introduire peut être préalablement programmée par l'intermédiaire de l'unité à microprocesseur. Cette période de temps est définie par exemple entre 0,5 s et 2 s.

De cette première référence, le doigt peut être déplacé sur le verre selon une trajectoire anti-horaire d1 ou selon une trajectoire horaire e1 pour atteindre la plage sensible ou la touche de la seconde référence du code à composer. Cette seconde référence est définie comme le chiffre 5. L'unité à microprocesseur de la montre détermine la trajectoire de déplacement (ici horaire ou anti-horaire) du doigt sur le verre de montre par les touches ou les plages sensibles activées successivement. Sur la première trajectoire d1, les touches représentant les chiffres 1 et 6 sont activées lors du déplacement du doigt vers la touche du chiffre 5. Sur la seconde trajectoire e1, les touches 3 et 4 sont activées lors du déplacement du doigt vers la touche du chiffre 5. Ainsi selon la première trajectoire anti-horaire d1, un premier code peut être composé avec les chiffres 2 et 5, et selon la seconde trajectoire horaire e1, un second code peut être composé avec les chiffres 2 et 5. De ce fait selon l'invention, il est nécessaire de connaître en plus de l'ordre des chiffres du code de sécurité, la trajectoire de déplacement du doigt.

Si le code de sécurité n'était défini que par deux références en plus du sens de rotation du doigt sur le verre, le chiffre 5 constituerait le dernier chiffre du code à composer. Ce chiffre peut être introduit en soulevant le doigt de la touche ou plage sensible de ce chiffre 5, ce qui a pour conséquence également de valider le code composé. Toutefois, il peut être prévu également que l'introduction de ce chiffre 5 dans le code de sécurité, soit réalisé en maintenant le doigt sur la touche du chiffre 5 pendant une période de temps déterminée comme montré sur le plan B de la figure 1a.

Avec uniquement deux chiffres et la direction de déplacement du doigt dans le sens horaire ou le sens anti-horaire, il est possible de composer 72 codes de sécurité avec les 6 touches du verre de montre en ne faisant pas plus d'un tour avec le doigt pour introduire les deux chiffres du code. Les deux chiffres peuvent être identiques ou différents, par exemple "1 1" ou "1 2".

Bien entendu, un nombre plus important de codes de sécurité à deux chiffres peut être composé si l'unité à microprocesseur tient compte également du nombre de tours du doigt dans le sens horaire ou dans le sens anti-horaire du premier chiffre au second chiffre du code à composer.

De cette seconde référence représentant le chiffre 5, le doigt peut être déplacé sur le verre selon une trajectoire horaire d2 ou selon une trajectoire anti-horaire e2 pour atteindre la touche ou plage sensible de la troisième référence du code à composer. Cette troisième référence est définie comme le chiffre 3. Comme précédemment, l'unité à microprocesseur détermine la trajectoire de déplacement du doigt (ici horaire ou anti-horaire) sur le verre par les touches activées successivement. Sur la troisième trajectoire horaire d2, les touches représentant les chiffres 6, 1 et 2 sont activées lors du déplacement du doigt vers la touche du chiffre 3. Sur la quatrième trajectoire anti-horaire e2, la touche représentant le chiffre 4 est activée lors du déplacement du doigt vers la touche du chiffre 3. Pour introduire le chiffre 3 dans le code de sécurité, le doigt doit rester sur la plage sensible ou touche du chiffre 3 pendant une période de temps déterminée comme montré sur le plan C de la figure 1a. Pour valider le code de sécurité composé, le doigt est soulevé de la plage sensible du chiffre 3. Dès cet instant, l'unité à microprocesseur détermine la fin de la composition du code de sécurité. Ainsi, quatre codes de sécurité différents peuvent être composés avec les chiffres 2, 5 et 3 dans l'ordre indiqué selon les trajectoires de déplacement du doigt sur le verre de montre.

Avec trois chiffres et les trajectoires de déplacement du doigt dans le sens anti-horaire ou le sens horaire, il est possible de composer 864 codes de sécurité différents avec les 6 touches en périphérie du verre en ne faisant pas plus d'un tour avec le doigt d'un chiffre à l'autre à introduire dans le code. Dans ce cas, l'unité à microprocesseur peut se contenter de détecter une touche ou plage sensible activée entre chaque référence pour déterminer la trajectoire de déplacement du doigt.

Comme précédemment décrit, un nombre plus important de codes de sécurité à trois chiffres peut être composé si l'unité à microprocesseur tient compte également du nombre de tours du doigt dans le sens horaire ou dans le sens anti-horaire entre les différents chiffres du code à composer.

De manière plus rapide, l'introduction de la seconde référence dans un code de sécurité qui comprend au moins trois références peut être réalisée en détectant un changement de trajectoire du doigt à l'endroit de la touche ou plage sensible de la seconde référence du code à composer. Selon la forme d'exécution illustrée aux figures 1a et 1b, l'unité à microprocesseur détecte le changement d'une trajectoire horaire à une trajectoire anti-horaire, ou inversement. De ce fait, le code de sécurité peut être composé plus rapidement, car il n'est pas nécessaire ainsi de prévoir un temps d'attente sur la touche de cette seconde référence pour l'introduire dans le code de sécurité. Toutefois un moins grand nombre de codes de sécurité peut être composé. De la touche de la première référence, le doigt peut être déplacé selon la trajectoire anti-horaire d1 à la touche de la seconde référence puis directement selon la trajectoire horaire d2 à la touche de la troisième référence. Le doigt peut également être déplacé selon la trajectoire horaire e1 de la touche de la première référence à la touche de la seconde référence, puis directement selon la trajectoire anti-horaire e2 à la touche de la troisième référence. Depuis cette touche de la troisième référence, le doigt peut directement être soulevé du verre pour valider le code de sécurité avec ces trois références et les trajectoires de déplacement du doigt.

En détectant un changement de trajectoire, le code de sécurité à composer avec les touches du verre de montre s'apparente à la composition d'un code de sécurité au moyen d'une serrure à roulette d'un coffre-fort.

Bien entendu, le nombre de codes de sécurité qui peuvent être composés sur le verre de montre peut être plus important. Pour cela, l'unité à microprocesseur doit être en mesure de détecter l'ordre de chaque touche activée sur le verre de la première référence à la seconde référence, ou de la seconde référence à la troisième référence. Cependant, l'utilisateur doit pouvoir se rappeler du trajet que doit emprunter le doigt entre chaque référence du code à composer. La manière la plus rapide et la plus sûre est que le doigt suive le bord supérieur de la lunette dans le sens anti-horaire ou dans le sens horaire entre chaque référence du code à composer.

Toutes les étapes de composition du code de sécurité décrites ci-devant sont représentées plus clairement sur la figure 1b. Sur le plan A, le doigt ou le stylet est montré par la touche en gras représentant le chiffre 2 à activer. Depuis la touche de ce chiffre 2, le doigt peut être déplacé sur le verre selon la trajectoire anti-horaire d1 ou la trajectoire horaire e1 pour atteindre la touche du chiffre 5. Sur le plan B, le doigt ou le stylet est montré par la touche en gras représentant le chiffre 5 à introduire dans le code de sécurité. Le doigt ou le stylet peut être maintenu pendant une période de temps déterminée sur la touche du chiffre 5 pour l'introduire dans le code. Ce chiffre 5 peut aussi être introduit par changement de trajectoire du doigt ou du stylet à l'endroit de la touche du chiffre 5. Depuis cette touche du chiffre 5, le doigt ou le stylet peut être déplacé sur le verre selon la trajectoire horaire d2 ou la trajectoire anti-horaire e2 pour atteindre la touche du chiffre 3. Sur le plan C, le doigt ou le stylet est montré par la touche en gras représentant le chiffre 3 à introduire. En maintenant le doigt ou le stylet sur la touche du chiffre 3 pendant une période de temps déterminée ou simplement en soulevant le doigt ou le stylet de l'écran, le chiffre 3 peut être introduit dans le code de sécurité.

Pendant les étapes de composition du code, les références du code et le trajet emprunté par le doigt peuvent être momentanément mémorisées par l'unité à microprocesseur avant le contrôle dudit code autorisé. Une fois que la composition du code est terminée, une opération de contrôle du code de sécurité introduit peut donc être réalisée dans l'unité à microprocesseur. Si le code de sécurité composé sur le verre de montre correspond à un code préalablement mémorisé, l'utilisateur peut accéder à une fonction spécifique de la montre, telle qu'une fonction agenda. Cependant, ce code de sécurité peut également être transmis par des signaux radiofréquences courte distance pour autoriser l'accès à un appareil électronique, tel qu'une station d'ordinateur ou un portique.

Il est à noter que le contrôle du code de sécurité peut être réalisé immédiatement lors des diverses étapes de composition dudit code par l'unité à microprocesseur ou par un appareil électronique recevant les signaux du code de sécurité de la montre.

Dans des étapes préliminaires du procédé d'introduction du code de sécurité, l'utilisateur peut déterminer les chiffres et les trajectoires de déplacement du doigt qu'il souhaite mémoriser notamment dans la mémoire non volatile de la montre. Pour ce faire, il doit exécuter également les opérations indiquées ci-dessus lorsqu'il se trouve dans un mode de modification ou d'enregistrement du code de sécurité.

Dans le mode de composition du code de sécurité ou dans le mode de modification ou d'enregistrement dudit code, les aiguilles de la montre analogique peuvent être déplacées pour indiquer chaque chiffre composé du code de sécurité.

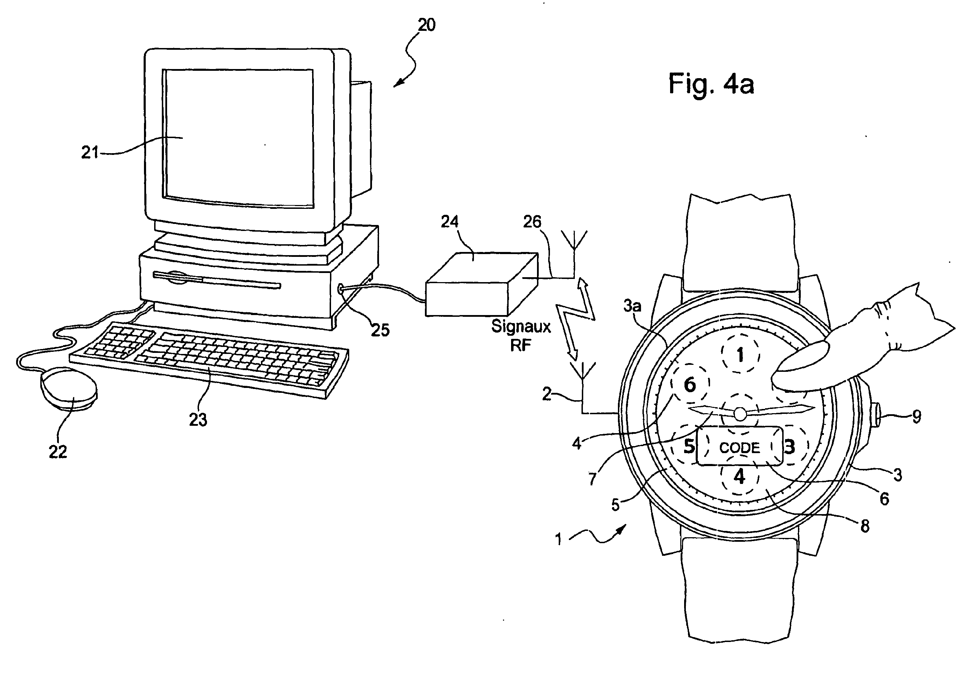

A la figure 4a, la montre-bracelet 1, montrée à la figure 1a, est utilisée pour la mise en oeuvre du procédé d'introduction du code de sécurité afin d'avoir accès à une station d'ordinateur personnelle 20. La station d'ordinateur 20 est composée pour l'essentiel d'un clavier 23, d'une souris 22 et d'un écran 21. En règle générale pour l'utilisation de la station d'ordinateur personnelle 20, un mot de passe doit être introduit à l'aide du clavier 23. Cependant selon l'invention, l'introduction de ce mot de passe ou code de sécurité peut être réalisé à l'aide de la montre-bracelet 1 comme décrite ci-dessus en référence à la figure 1 a.

La station d'ordinateur 20 comprend encore un boîtier périphérique 24, qui est relié par un câble 25 du type USB ou autre à une entrée de la station d'ordinateur. Ce boîtier 24 comprend des moyens d'émission et/ou de réception de signaux radiofréquences courte distance avec une antenne 26 pour la station d'ordinateur 20. Il est bien clair que ces moyens d'émission et/ou de réception de la station d'ordinateur, dans une variante d'exécution, peuvent être également intégrés dans la partie principale de ladite station. La montre 1 comprend également des moyens d'émission et/ou de réception de signaux radiofréquences courte distance avec une antenne 2 pour la transmission uni- ou bidirectionnelle d'information dans une zone d'action de la station d'ordinateur. Les deux unités avec leurs moyens d'émission et/ou de réception permettent donc de mettre en oeuvre ie procédé d'introduction du code de sécurité selon l'invention.

Dès que la station d'ordinateur est enclenchée, il peut être prévu qu'un signal d'interrogation soit transmis à la montre-bracelet afin de placer la montre dans un mode de composition du code. Ce signal d'interrogation peut commander l'enclenchement des touches de commande de la montre pour permettre la composition du code de sécurité. Une information sur les opérations à entreprendre peut être affichée sur l'affichage à cristaux liquides 6 de la montre. L'utilisateur peut être informé à quel moment il peut débuter à composer le code de sécurité, et si le code introduit est correct.

Une fois que le code a été composé dans la montre, l'unité à microprocesseur contrôle la validité du code introduit et commande les moyens d'émission pour la transmission de ce code de sécurité, qui peut être sous forme cryptée. La station d'ordinateur reçoit ce code de sécurité ou mot de passe et permet l'accès à ces diverses applications si le code de sécurité introduit dans la montre est correct.

Il est à noter que le contrôle du code de sécurité composé sur la montre peut être réalisé également dans la station d'ordinateur. Dans ce cas, l'unité à microprocesseur de la montre ne fait que des opérations de traitement du code de sécurité composé afin de le transmettre à la station d'ordinateur.

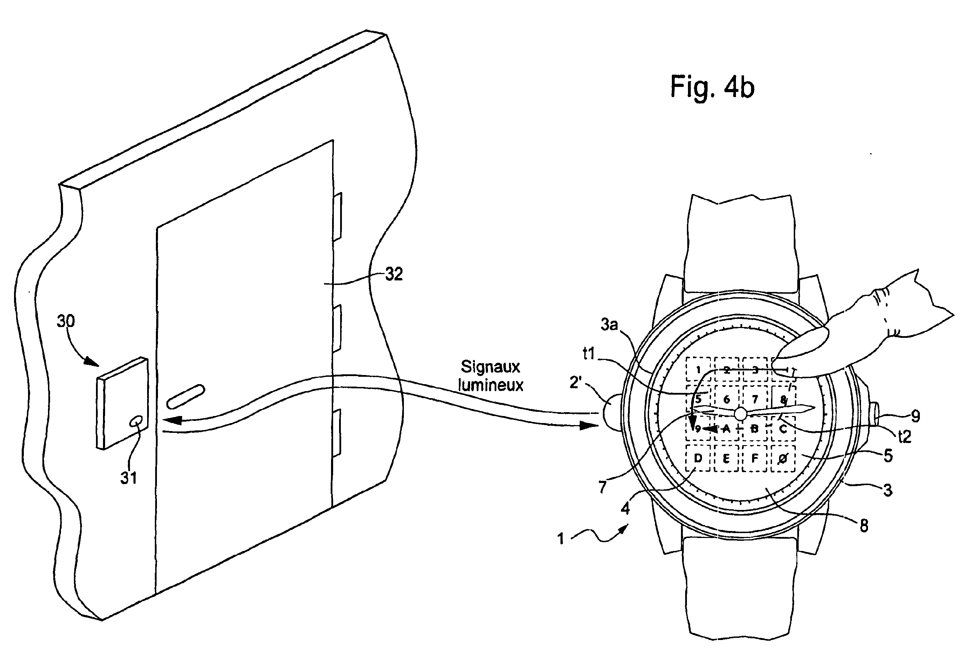

A la figure 4b, une seconde forme d'exécution d'une montre-bracelet est présentée pour la mise en oeuvre du procédé d'introduction du code de sécurité afin d'accéder par une porte 32 à un lieu protégé. A l'entrée du lieu protégé, un instrument 30 de contrôle du code de sécurité verrouille la porte d'accès 32 tant que le code de sécurité mémorisé n'est pas introduit. Cet instrument 30 comprend des moyens d'émission et/ou de réception 31 de signaux lumineux pour communiquer avec une montre-bracelet à proximité, qui dispose également de moyens d'émission et/ou de réception de signaux lumineux 2'. Ces moyens 2' de la montre ne sont en principe enclenchés qu'une fois que le bouton-poussoir 9 de la montre est pressé et qu'un mode de transmission est sélectionné de manière à éviter une trop grande consommation d'énergie. Dès que le bouton 9 est pressé, les touches de commande 4 du verre de montre sont opérationnelles. Une information visuelle ou acoustique peut prévenir l'utilisateur du début du code à composer ou du code correct introduit.

Dans cette seconde forme d'exécution, les touches de commande 4 comprennent des plages sensibles réparties de manière matricielle sur le verre de montre. Chaque touche de commande est constituée d'une plage sensible qui représente un chiffre ou un nombre particulier. Toutefois selon une programmation de l'unité à microprocesseur, chaque touche de commande peut être constituée éventuellement d'un groupe de plages sensibles. A la figure 4b, le verre de montre comprend 16 plages sensibles représentant 16 touches de commande 4. Bien entendu, plus de touches de commande, par exemple 25 touches ou plus, peuvent être prévues sur le verre de montre. Si ce nombre de touches est trop important, l'unité à microprocesseur doit être en mesure de déterminer quelle plage ou groupe de plages configuré a été sélectionné par le doigt pour la composition du code de sécurité.

A la figure 4b, il peut être prévu de composer un code de sécurité ne comprenant que deux chiffres ou nombres, par exemple les chiffres 4 et 9. Le doigt est posé tout d'abord sur la première référence de la touche représentant le chiffre 4. Il peut être maintenu sur cette plage sensible de la touche pendant une période de temps déterminée afin d'introduire le chiffre 4 du code à composer. Selon une autre variante de réalisation, l'unité à microprocesseur peut prendre en compte directement le chiffre 4 dès que le doigt est posé sur la touche du chiffre 4. Depuis, cette première référence, le doigt peut être déplacé selon plusieurs trajectoires possibles pour atteindre la seconde référence de la touche représentant le chiffre 9. Uniquement une première trajectoire t1 et une seconde trajectoires t2 sont indiquées respectivement par un trait en continu et un trait en discontinu sur cette figure. L'unité à microprocesseur détermine les touches ou plages sensibles activées lors du déplacement du doigt sur le verre de la première référence à la seconde référence. Elle attribue un indicateur particulier à chaque trajectoire empruntée pour la composition du code de sécurité. De ce fait, il est nécessaire de se rappeler, en plus de l'ordre des chiffres ou nombres du code, de la trajectoire de déplacement du doigt sur le verre de la première référence à la seconde référence.

A partir de la description qui vient d'être faite de multiples variantes de réalisation du procédé d'introduction du code de sécurité peuvent être conçues par l'homme du métier sans sortir du cadre de l'invention définie par les revendications. L'écran tactile pour la mise en oeuvre du procédé selon l'invention peut faire partie d'un dispositif électronique placé dans un appareil d'un lieu déterminé plutôt que dans un objet portable, tel qu'une montre-bracelet, un téléphone portable ou un dispositif du type bloc-notes. Le nombre de plages sensibles peut être plus grand que 100. Dans ce cas, chaque touche de commande est constitué par un groupe de plages sensibles selon une programmation de l'unité à microprocesseur. De plus, il peut être prévu plusieurs codes de sécurité mémorisés par exemple dans le dispositif électronique pour l'accès à plusieurs appareils, plusieurs lieux ou plusieurs fonctions. Les codes de sécurité peuvent comprendre également plus de trois références.

## Revendications

1. Procédé d'introduction d'un code de sécurité à l'aide d'un écran tactile (5) d'un dispositif électronique pour l'accès à une fonction spécifique, à un appareil (20) ou à un lieu déterminé (32), l'écran tactile comprenant des touches de commande (4) pouvant être activées par une action manuelle d'un utilisateur au moyen d'un doigt ou d'un stylet, les touches étant constituées chacune par au moins une plage sensible reliée à une unité à microprocesseur (11) du dispositif électronique, **caractérisé en ce que** le procédé comprend une série d'étapes, dans un mode de composition du code de sécurité, qui consiste à :
a) placer un doigt ou un stylet sur une première touche (4) de l'écran tactile représentant une première référence du code à composer,
b) déplacer le doigt ou le stylet sur l'écran tactile de la première touche à une seconde touche de l'écran tactile représentant une seconde référence du code à composer selon une trajectoire déterminée (d1, e1; t1, t2), dans laquelle l'unité à microprocesseur prend en compte les touches ou plages sensibles activées lors du déplacement du doigt ou du stylet sur l'écran pour déterminer le code de sécurité.

2. Procédé selon la revendication 1, **caractérisé en ce que** le doigt ou le stylet est retiré de l'écran tactile de la dernière référence du code à composer pour valider ledit code afin d'accéder à la fonction, à l'appareil ou au lieu déterminé.

3. Procédé selon la revendication 1, dans lequel le dispositif électronique comprend une mémoire (12) reliée à l'unité à microprocesseur (11) pour l'enregistrement d'au moins un code de sécurité d'accès à une fonction, à un appareil (20) ou à un lieu déterminé (32), **caractérisé en ce que**, lorsque le dispositif électronique est placé dans un mode d'enregistrement ou de modification du code de sécurité de la mémoire, le procédé comprend une série d'étapes correspondant aux étapes a) et b), et une étape consistant à retirer le doigt ou le stylet de l'écran tactile de la dernière référence du code à composer pour valider ledit code.

4. Procédé selon l'une des revendications précédentes, dans lequel l'unité à microprocesseur (11) est reliée à une mémoire (12), le code de sécurité, qui est enregistré ou à enregistrer dans la mémoire, comprenant plus de deux références représentées par des chiffres ou des nombres, **caractérisé en ce que**, dans le mode de composition du code de sécurité ou dans un mode d'enregistrement ou modification du code de sécurité de la mémoire, l'unité à microprocesseur détecte, pour chaque référence à introduire du code de sécurité entre la première et la dernière référence, soit un changement de trajectoire de déplacement du doigt ou du stylet sur l'écran à l'endroit de la touche de la référence à introduire, soit une période de temps déterminée de maintien du doigt ou du stylet sur la touche de la référence à introduire, et **en ce que** le code de sécurité est validé en retirant le doigt ou le stylet de la touche de la dernière référence à introduire.

5. Procédé selon l'une des revendications précédentes, **caractérisé en ce que** le doigt ou le stylet est maintenu pendant une période de temps déterminée sur la touche de chaque référence du code de sécurité pour introduire chaque référence dans le code à composer selon une programmation de l'unité à microprocesseur.

6. Procédé selon la revendication 1 dans lequel le dispositif est un objet portable muni de moyens d'émission et/ou de réception de signaux (2, 2') pour communiquer sans fil avec un émetteur/récepteur (24, 26, 30, 31) de l'appareil ou du lieu déterminé, **caractérisé en ce qu'**un signal d'interrogation est transmis de l'émetteur/récepteur afin d'être reçu par l'objet portable dans une zone délimitée, et **en ce qu'**après réception du signal d'interrogation, le code de sécurité est composé sur l'objet portable afin d'être transmis à l'émetteur/récepteur et contrôlé pour permettre l'accès à l'appareil ou au lieu déterminé.

7. Procédé selon la revendication 6, **caractérisé en ce que** les touches de commande (4) de l'écran tactile sont mises en fonction dès la réception du signal d'interrogation.

8. Procédé selon la revendication 1, dans lequel le dispositif électronique est une montre-bracelet (1) munie d'un affichage à cristaux liquides (6), de moyens d'émission et/ou de réception de signaux (2, 2'), et d'au moins un bouton de commande (9) pour enclencher diverses fonctions de la montre, **caractérisé en ce que** les touches de commande (4) de l'écran tactile sont mises en fonction quand le bouton est pressé, et **en ce que** l'affichage à cristaux liquides (6) signale différentes opérations de composition, de contrôle et de transmission du code de sécurité.

9. Procédé selon la revendication 1, dans lequel le dispositif électronique est une montre-bracelet (1) munie d'un affichage à cristaux liquides (6), de moyens d'émission et/ou de réception de signaux (2, 2'), et d'au moins un bouton de commande (9) pour enclencher diverses fonctions de la montre, les touches de commande étant situées en périphérie du verre de montre pour la composition du code, des repères étant placés sur le verre pour indiquer la position des touches de commande et leur référence, **caractérisé en ce que** le doigt ou le stylet est déplacé d'une référence à une autre référence du code à composer sur le verre dans un sens horaire ou dans un sens anti-horaire selon une programmation préalable du code de sécurité effectuée dans l'unité à microprocesseur.

10. Procédé selon la revendication 9, dans lequel le code de sécurité comprend plus de deux références, **caractérisé en ce qu'**après l'introduction de la première référence et avant la dernière référence du code à composer, l'unité à microprocesseur détecte un changement de sens de rotation du doigt ou du stylet sur le verre à l'endroit d'une touche d'une référence du code à introduire.

11. Procédé selon la revendication 9, **caractérisé en ce que** le doigt ou le stylet est déplacé sur le verre d'une référence à une autre référence en étant guidé par un bord supérieur d'une lunette (3a) du boîtier (3).

12. Procédé selon la revendication 9, dans lequel la montre comprend des aiguilles (7) d'indication de l'heure, **caractérisé en ce que** les aiguilles se déplacent pour indiquer chaque référence introduite du code de sécurité dans le mode de composition du code de sécurité ou dans un mode d'enregistrement ou modification du code de sécurité d'une mémoire (12) reliée à l'unité à microprocesseur (11).

13. Procédé selon la revendication 1, dans lequel le dispositif électronique est une montre-bracelet (1) munie de moyens d'émission et/ou de réception de signaux (2, 2'), et d'au moins un bouton de commande (9) pour enclencher diverses fonctions de la montre, les touches de commande étant réparties sous forme matricielle sur le verre de montre pour la composition du code, des repères étant placés sur le verre pour indiquer la position des touches de commande et leur référence, **caractérisé en ce que** le doigt ou le stylet est déplacé d'une référence, représentant un chiffre ou un nombre, à une autre référence, représentant un chiffre ou un nombre, du code de sécurité à composer selon une trajectoire déterminée, dans laquelle l'unité à microprocesseur prend en compte les touches de commande activées lors du déplacement du doigt ou du stylet sur l'écran pour déterminer le code de sécurité.

14. Procédé selon la revendication 1, **caractérisé en ce que** l'unité à microprocesseur (11) contrôle le code de sécurité à chaque étape de composition ou à la fin de la composition du code à l'aide d'un code de sécurité de référence placé dans une mémoire non volatile (12) du dispositif électronique.

15. Procédé selon la revendication 1, dans lequel le dispositif électronique est une montre-bracelet de type analogique, **caractérisé en ce que** le nombre de touches sur l'écran tactile est de 12 ou un multiple de 12 de manière à associer chaque référence du code à composer à un chiffre des heures, qui est affiché sur le cadran de la montre-bracelet.

16. Dispositif électronique pour la mise en oeuvre du procédé selon l'une des revendications précédentes, le dispositif comprenant un écran tactile avec des touches de commande (4) pouvant être activées par une action manuelle d'un utilisateur au moyen d'un doigt ou d'un stylet, les touches étant constituées chacune par au moins une plage sensible reliée à une unité à microprocesseur (11), **caractérisé en ce que** l'unité à microprocesseur est agencée pour prendre en compte les touches ou plages sensibles activées lors du déplacement du doigt ou du stylet sur l'écran d'une première touche représentant une première référence à une seconde touche représentant une seconde référence pour déterminer le code de sécurité.

## Patentansprüche

1. Verfahren zum Eingeben eines Sicherheitscodes mit Hilfe eines Berührungsschirms (5) einer elektronischen Vorrichtung für den Zugang zu einer spezifischen Funktion, einem bestimmten Gerät (20) oder einem bestimmten Ort (32), wobei der Berührungsschirm Steuertasten (4) umfasst, die durch eine manuelle Betätigung eines Anwenders mittels eines Fingers oder eines Stifts aktiviert werden können, wobei die Tasten jeweils durch wenigstens einen empfindlichen Bereich gebildet sind, der mit einer Mikroprozessoreinheit (11) der elektronischen Vorrichtung verbunden ist, **dadurch gekennzeichnet, dass** das Verfahren in einer Betriebsart des Zusammensetzens des Sicherheitscodes eine Reihe von Schritten umfasst, die darin besteht:
a) einen Finger oder einen Stift auf einer ersten Taste (4) des Berührungsschirms anzuordnen, die ein erstes Zeichen des zusammenzusetzenden Codes repräsentiert,
b) den Finger oder den Stift auf dem Berührungsschirm von der ersten Taste zu einer zweiten Taste des Berührungsschirms, die ein zweites Zeichen des zusammenzusetzenden Codes repräsentiert, längs einer vorgegebenen Bahn (d1, e1; t1, t2) zu verlagern, auf der die Mikroprozessoreinheit die aktivierten Tasten oder empfindlichen Bereiche bei der Verlagerung des Fingers oder des Stifts auf dem Schirm berücksichtigt, um den Sicherheitscode zu bestimmen.

2. Verfahren nach Anspruch 1, **dadurch gekennzeichnet, dass** der Finger oder der Stift von dem Berührungsschirm des letzten Zeichens des zusammenzusetzenden Codes zurückgezogen wird, um den Code zu validieren, um Zugang zu der bestimmten Funktion, dem bestimmten Gerät oder dem bestimmten Ort zu erlangen.

3. Verfahren nach Anspruch 1, bei dem die elektronische Vorrichtung einen mit der Mikroprozessoreinheit (11) verbundenen Speicher (12) umfasst, um wenigstens einen Sicherheitscode für den Zugang zu einer bestimmten Funktion, einem bestimmten Gerät (20) oder einem bestimmten Ort (32) zu registrieren, **dadurch gekennzeichnet, dass** das Verfahren dann, wenn die elektronische Vorrichtung in eine Betriebsart des Aufzeichnens oder Modifizierens des Sicherheitscodes des Speichers versetzt ist, eine Reihe von Schritten, die den Schritten a) und b) entsprechen, sowie einen Schritt umfasst, der darin besteht, den Finger oder den Stift von dem Berührungsschirm des letzten Zeichens des zusammenzusetzenden Codes zurückzuziehen, um den Code zu validieren.

4. Verfahren nach einem der vorhergehenden Ansprüche, bei dem die Mikroprozessoreinheit (11) mit einem Speicher (12) verbunden ist, wobei der Sicherheitscode, der in den Speicher aufgezeichnet ist oder aufgezeichnet werden soll, mehr als zwei Zeichen umfasst, die durch Ziffern oder Zahlen repräsentiert sind, **dadurch gekennzeichnet, dass** in der Betriebsart des Zusammensetzens des Sicherheitscodes oder in einer Betriebsart des Aufzeichnens oder Modifizierens des Sicherheitscodes des Speichers die Mikroprozessoreinheit für jedes einzugebende Zeichen des Sicherheitscodes zwischen dem ersten und dem letzten Zeichen entweder eine Änderung der Verlagerungsbahn des Fingers oder des Stifts auf dem Schirm am Ort der Taste des einzugebenden Zeichens oder eine bestimmte Haltedauer des Fingers oder des Stifts auf der Taste des einzugebenden Zeichens erfasst und dass der Sicherheitscode durch Zurückziehen des Fingers oder des Stifts von der Taste des letzten einzugebenden Zeichens validiert wird.

5. Verfahren nach einem der vorhergehenden Ansprüche, **dadurch gekennzeichnet, dass** der Finger oder der Stift während einer bestimmten Zeitdauer entsprechend einer Programmierung der Mikroprozessoreinheit auf der Taste jedes Zeichens des einzugebenden Sicherheitscodes gehalten wird.

6. Verfahren nach Anspruch 1, bei dem die Vorrichtung ein tragbarer Gegenstand ist, der mit Mitteln (2, 2') zum Senden und/oder Empfangen von Signalen versehen ist, um mit einem Sender/Empfänger (24, 26, 30, 31) des bestimmten Geräts oder Orts drahtlos zu kommunizieren, **dadurch gekennzeichnet, dass** von dem Sender/Empfänger ein Abfragesignal gesendet wird, das von dem tragbaren Gegenstand in einer begrenzten Zone empfangen wird, und dass nach dem Empfang des Abfragesignals der Sicherheitscode auf dem tragbaren Gegenstand zusammengesetzt wird, um zu dem Sender/Empfänger gesendet und kontrolliert zu werden, um den Zugang zu dem bestimmten Gerät oder dem bestimmten Ort zu ermöglichen.

7. Verfahren nach Anspruch 6, **dadurch gekennzeichnet, dass** die Steuertasten (4) des Berührungsschirms in Betrieb gesetzt werden, sobald das Abfragesignal empfangen wird.

8. Verfahren nach Anspruch 1, bei dem die elektronische Vorrichtung eine Armbanduhr (1) ist, die mit einer Flüssigkristallanzeige (6), Mitteln (2, 2') zum Senden und/oder Empfangen von Signalen und wenigstens einem Steuerknopf (9), um verschiedene Funktionen der Uhr auszulösen, versehen ist, **dadurch gekennzeichnet, dass** die Steuertasten (4) des Berührungsschirms in Betrieb gesetzt werden, wenn der Knopf gedrückt wird, und dass die Flüssigkristallanzeige (6) verschiedene Operationen des Zusammensetzens, Kontrollierens und Sendens des Sicherheitscodes meldet.

9. Verfahren nach Anspruch 1, bei dem die elektronische Vorrichtung eine Armbanduhr (1) ist, die mit einer Flüssigkristallanzeige (6), Mitteln (2, 2') zum Senden und/oder Empfangen von Signalen und wenigstens einem Steuerknopf (9), um verschiedene Funktionen der Uhr auszulösen, versehen ist, wobei sich die Steuertasten am Umfang des Uhrenglases befinden, um den Code zusammenzusetzen, wobei auf dem Glas Markierungen angeordnet sind, um die Position der Steuertasten und ihr Zeichen anzugeben, **dadurch gekennzeichnet, dass** der Finger oder der Stift von einem Zeichen zu einem anderen Zeichen des zusammenzusetzenden Codes auf dem Glas im Uhrzeigersinn oder im Gegenuhrzeigersinn entsprechend einer vorherigen Programmierung des Sicherheitscodes, die in der Mikroprozessoreinheit vorgenommen worden ist, verlagert wird.

10. Verfahren nach Anspruch 9, bei dem der Sicherheitscode mehr als zwei Zeichen umfasst, **dadurch gekennzeichnet, dass** nach der Eingabe des ersten Zeichens und vor dem letzten Zeichen des zusammenzusetzenden Codes die Mikroprozessoreinheit eine Änderung des Drehsinns des Fingers oder des Stifts auf dem Glas am Ort einer Taste eines Zeichens des einzugebenden Codes erfasst.

11. Verfahren nach Anspruch 9, **dadurch gekennzeichnet, dass** der Finger oder der Stift auf dem Glas von einem Zeichen zu einem weiteren Zeichen verlagert wird, indem er mittels eines oberen Randes eines Glasreifs (3a) des Gehäuses (3) geführt wird.

12. Verfahren nach Anspruch 9, bei dem die Uhr Zeiger (7) für die Zeitangabe umfasst, **dadurch gekennzeichnet, dass** sich die Zeiger verlagern, um jedes eingegebene Zeichen des Sicherheitscodes in der Betriebsart des Zusammensetzens des Sicherheitscodes oder in einer Betriebsart des Aufzeichnens oder Modifizierens des Sicherheitscodes in einem mit der Mikroprozessoreinheit (11) verbundenen Speicher (12) anzugeben.

13. Verfahren nach Anspruch 1, bei dem die elektronische Vorrichtung eine Armbanduhr (1) ist, die mit Mitteln (2, 2') zum Senden und/oder Empfangen von Signalen und wenigstens einem Steuerknopf (9), um verschiedene Funktionen der Uhr auszulösen, versehen ist, wobei die Steuertasten matrixförmig auf dem Uhrenglas verteilt sind, um den Code zusammenzusetzen, wobei auf dem Glas Markierungen angeordnet sind, um die Position der Steuertasten und ihr Zeichen anzugeben, **dadurch gekennzeichnet, dass** der Finger oder der Stift von einem eine Ziffer oder eine Zahl repräsentierenden Zeichen zu einem weiteren eine Ziffer oder eine Zahl repräsentierenden Zeichen des zusammenzusetzenden Sicherheitscodes auf einer gegebenen Bahn verlagert wird, auf der die Mikroprozessoreinheit die bei der Verlagerung des Fingers oder des Stifts auf dem Schirm aktivierten Steuertasten berücksichtigt, um den Sicherheitscode zu bestimmen.

14. Verfahren nach Anspruch 1, **dadurch gekennzeichnet, dass** die Mikroprozessoreinheit (11) den Sicherheitscode in jedem Zusammensetzungsschritt oder am Ende der Zusammensetzung des Codes mit Hilfe eines Referenz-Sicherheitscodes kontrolliert, der in einem nichtflüchtigen Speicher (12) der elektronischen Vorrichtung abgelegt ist.

15. Verfahren nach Anspruch 1, bei dem die elektronische Vorrichtung eine Armbanduhr des analogen Typs ist, **dadurch gekennzeichnet, dass** die Anzahl der Tasten auf dem Berührungsschirm 12 oder ein Vielfaches von 12 ist, derart, dass jedem Zeichen des zusammenzusetzenden Codes eine Stundenziffer zugeordnet ist, die auf dem Zifferblatt der Armbanduhr angezeigt wird.

16. Elektronische Vorrichtung für die Ausführung des Verfahrens nach einem der vorhergehenden Ansprüche, wobei die Vorrichtung einen Berührungsschirm mit Steuertasten (4) umfasst, die durch eine manuelle Betätigung eines Anwenders mittels eines Fingers oder eines Stifts aktiviert werden können, wobei die Tasten jeweils durch wenigstens einen mit einer Mikroprozessoreinheit (11) verbundenen empfindlichen Bereich gebildet sind, **dadurch gekennzeichnet, dass** die Mikroprozessoreinheit so beschaffen ist, dass sie die Tasten oder empfindlichen Bereiche, die bei der Verlagerung des Fingers oder des Stifts auf dem Schirm von einer ein erstes Zeichen repräsentierenden ersten Taste zu einer ein zweites Zeichen repräsentierenden zweiten Taste aktiviert werden, berücksichtigt, um den Sicherheitscode zu bestimmen.

## Claims

1. Method of input of a security code by means of a touch screen (5) of an electronic device for access to a function, an apparatus (20) or a given location (32), said touch screen comprising control keys (4), which can be activated by a manual action of a user using a finger or a stylus, each of said keys being made up of at least one sensitive pad linked to a microprocessor unit (11) of the electronic device, **characterised in that** the method comprises a series of steps in an entry mode of the security code, which consists of
a) placing a finger or stylus on a first key (4) of the touch screen, which represents a first reference of the code to be entered;
b) moving the finger or stylus on the touch screen from the first key to a second key of the touch screen, which represents a second reference of the code to be entered, over a specific trajectory (d1, e1; t1, t2), wherein the microprocessor unit registers the sensitive keys or pads activated during the movement of the finger or stylus on the screen to determine the security code.

2. Method according to claim 1, **characterised in that** the finger or stylus is removed from the touch screen from the last reference of the code to be entered to validate said code in order to access to the function, apparatus or given location.

3. Method according to claim 1, wherein the electronic device comprises a memory (12) linked to the microprocessor unit (11) for recording at least one security code for access to a function, apparatus (20) or given location (32), **characterised in that** when the electronic device is in a mode for recording or modifying the security code on the memory, the method comprises a series of steps corresponding to steps a) and b), and a step consisting of removing the finger or stylus from the touch screen from the last reference of the code to be entered to validate said code.

4. Method according to one of the preceding claims, wherein the microprocessor unit (11) is linked to a memory (12), the security code recorded or to be recorded in the memory, comprising more than two references represented by digits or numbers, **characterised in that** in the entry mode of the security code or in a recording or modifying mode of the security code in the memory, for each reference of the security code to be input between the first and the last reference, the microprocessor unit detects either a change in trajectory of the movement of the finger or stylus on the screen in the area of the key of the reference to be input or a specific period of time of holding the finger or stylus on the key of the reference to be input, and **in that** the security code is validated by removing the finger or stylus from the key of the last reference to be input.

5. Method according to one of the preceding claims, **characterised in that** the finger or stylus is held on the key of each reference of the security code for a specific period of time to input each reference in the code to be entered in accordance with programming of the microprocessor unit.

6. Method according to claim 1, wherein the apparatus is a portable object fitted with means for transmitting and/or receiving signals (2, 2') for wireless communication with a transceiver (24, 26, 30, 31) of the apparatus or the given location, **characterised in that** an inquiry signal is transmitted by the transceiver to be received by the portable object in a defined zone, and **in that** after receipt of the inquiry signal, the security code is entered on the portable object in order to be transmitted to the transceiver and verified to allow access to the apparatus or given location.

7. Method according to claim 6, **characterised in that** the control keys (4) of the touch screen are activated as soon as the inquiry signal is received.

8. Method according to claim 1, wherein the electronic device is a wrist watch (1) fitted with a liquid-crystal display (6), means for transmitting and/or receiving signals (2, 2') and at least one control button (9) to actuate various functions of the watch, **characterised in that** the control keys (4) of the touch screen are activated when the button is pressed, and **in that** the liquid-crystal display (6) indicates different operations of entry, verification and transmission of the security code.

9. Method according to claim 1, wherein the electronic device is a wrist watch (1) fitted with a liquid-crystal display (6), means for transmitting and/or receiving signals (2, 2') and at least one control button (9) to actuate various functions of the watch, the control keys being situated around the periphery of the watch glass for entry of the code, reference marks being placed on the glass to indicate the position of the control keys and their reference, **characterised in that** the finger or stylus is moved from one reference to another reference of the code to be entered on the glass in a clockwise direction or an anti-clockwise direction in accordance with initial programming of the security code performed in the microprocessor unit.

10. Method according to claim 9, wherein the security code comprises more than two references, **characterised in that** after input of the first reference and before the last reference of the code to be entered, the microprocessor unit detects a change in the direction of rotation of the finger or stylus on the glass in the area of a key of a reference of the code to be input.

11. Method according to claim 9, **characterised in that** the finger or stylus is moved on the glass from one reference to another reference being guided by an upper edge of a bezel (3a) of the case (3).

12. Method according to claim 9, wherein the watch has hands (7) for indicating the time, **characterised in that** the hands move to indicate each input reference of the security code in the entry mode of the security code or in a recording or modifying mode of the security code in a memory (12) linked to the microprocessor unit (11).

13. Method according to claim 1, wherein the electronic device is a wrist watch (1) fitted with means for transmitting and/or receiving signals (2, 2') and at least one control button (9) to actuate various functions of the watch, the control keys being arranged in the form of a matrix on the watch glass for entry of the code, reference marks being placed on the glass to indicate the position of the control keys and their reference, **characterised in that** the finger or stylus is moved from one reference representing a digit or number to another reference representing a digit or number of the security code to be entered over a specific trajectory, wherein the microprocessor unit registers the control keys activated during the movement of the finger or stylus on the screen to determine the security code.

14. Method according to claim 1, **characterised in that** the microprocessor unit (11) verifies the security code at each step of entry or at the end of the code entry using a reference security code located in a non-volatile memory (12) of the electronic device.

15. Method according to claim 1, wherein the electronic device is an analog wrist watch, **characterised in that** the number of keys on the touch screen is 12 or a multiple of 12 in order to associate each reference of the code to be entered with an hour digit which is displayed on the dial of the wrist watch.

16. Electronic device for implementation of the method according to one of the preceding claims, the device comprising a touch screen with control keys (4), which can be activated by a manual action of a user using a finger or a stylus, each of said keys being made up of at least one sensitive pad connected to a microprocessor unit (11), **characterised in that** the microprocessor unit is fitted to register the sensitive keys or fields activated during the movement of the finger or stylus on the screen from one key representing a first reference to a second key representing a second reference to determine the security code.
